# EUROPÄISCHE PATENTSCHRIFT

(11) **EP 2 444 224 B1**
(45) Veröffentlichungstag und Bekanntmachung des Hinweises auf die Patenterteilung: **21.02.2018**
(21) Anmeldenummer: 11184732.3
(22) Anmeldetag: 11.10.2011
(51) Int. Cl.: B29C 45/44, B29C 45/26, B29C 45/56

(54) **Vorrichtung und Verfahren zur Herstellung von Kugellagerringen sowie hierdurch hergestellte Kugellagerringe**
Method and device for producing ball bearing rings as well as ball bearing rings produced therewith
Dispositif et procédé destinés à la fabrication d'anneaux de roulement à billes et d'anneaux de roulement à billes produits avec celui-ci

(30) Priorität: 21.10.2010 DE 102010049185
(43) Veröffentlichungstag der Anmeldung: 25.04.2012
(73) Patentinhaber: NP Germany GmbH, 59929 Berlin (DE)
(72) Erfinder: Baukloh, Horst, 58540 Meinerzhagen (DE)
(74) Vertreter: Patentanwälte Dörner & Kötter PartG mbB

(56) Entgegenhaltungen:
- DE-A1- 2 537 035
- DE-C1- 10 127 566

## Beschreibung

Die Erfindung betrifft eine Vorrichtung zur Herstellung von Kugellagerringen mit Laufrillen im Kunststoffspritzverfahren nach dem Oberbegriff des Patentanspruchs 1. Die Erfindung betrifft weiterhin ein Verfahren zur Herstellung von Kugellagerringen mit Laufrillen nach dem Oberbegriff des Patentanspruchs 8. Die Erfindung betrifft darüber hinaus den Innenring bzw. Außenring eines Radialkugellagers nach den Patentansprüchen 10 und 11.

Zur Herstellung von Thermoplastformteilen mit Hinterschneidungen sind Spritzgießformen bekannt, bei denen so genannte Faltkerne eingesetzt werden. Dabei bilden die Außenflächen der Segmente dieser Faltkerne im Spritzzustand die Form für die Innenwandung des Spritzteils. Weist diese Innenwandung Hinterschneidungen auf, so muss der Faltkern im Entformungszustand auf einen kleineren Außendurchmesser gebracht werden, der das Entformen des Spritzteils von dem Faltkern ermöglicht. Die Faltkerne ermöglichen dies dadurch, dass deren Segmente bei Axialbewegung entlang eines Trägerprofils nach Innen zusammen fallen. Ein Faltkern der vorgenannten Art ist beispielsweise aus der DE 26 19 046 C3 bekannt.

Nachteilig an den bekannten Faltkemen ist es, dass die einzelnen Segmente des Faltkerns über ihrem Umfang an den Stoßkanten Trennmarkierungen bewirken, welche bei der Herstellung von Kugellagerringen mit Laufrillen problematisch sind, da die Trennmarkierungen die Bewegung der Kugeln des Kugellagers beeinträchtigen können.

Hier will die Erfindung Abhilft schaffen. Der Erfindung liegt die Aufgabe zugrunde, eine Vorrichtung zur Herstellung von Kugellagerringen mit Laufrillen im Kunststoffspritzgießverfahren bereit zu stellen, bei der derartige hervorstehende Trennmarkierungen vermieden sind. Gemäß der Erfindung wird diese Aufgabe durch die Merkmale des kennzeichnenden Teils des Patentanspruchs 1 gelöst.

Mit der Erfindung ist eine Vorrichtung zur Herstellung von Kugellagerringen mit Laufrillen im Kunststoffspritzgießverfahren geschaffen, bei der die Bildung von hervorstehenden Trennmarkierungen vermieden ist. Durch das Vorsehen einer Durchmesseränderung an wenigstens einer Teilungskante eines jeden Formsegments des Faltkerns ist eine Beeinflussung der zwischen den Segmenten herausbildenden Trennmarkierung ermöglicht.

In Weiterbildung der Erfindung ist an beiden Teilungskanten eines jeden Formsegments eine Durchmesseränderung in Form eines erhabenen Keils angeordnet. Hierdurch ist eine Innenwölbung im Bereich der Trennmarkierung erzielt, welche einem Hervorstehen der Trennmarkierung entgegen wirkt.

In weiterer Ausgestaltung der Erfindung ist an einer Teilungskante eines jeden Formsegments eine Durchmesseränderung in Form einer Kerbe angeordnet, wobei das Trägerprofil um seine Achse rotierbar ausgeführt ist. Durch die Kerbe ist eine gezielte Materialanhäufung bewirkt, welche durch eine sich unmittelbar an dem Spritzgießvorgang anschließende Rotation des Trägerprofils um seine Achse gleichmäßig glatt geformt werden kann. Vorteilhaft ist das Trägerprofil mit einem Schrittmotor verbunden, über den es rotierbar ist.

In weiterer Ausgestaltung der Erfindung ist in der Form im Bereich der Teilungskanten jeweils ein radial verfahrbarer Zylinder angeordnet. Dieser Zylinder bewirkt eine verringerte Materialdicke im Bereich der Teilungskante, sodass die Wandung in diesem Bereich im Zuge der Glattformung der Trennmarkierung in Richtung des Zylinders verbracht werden kann. Dabei weist der Zylinder vorteilhaft an seiner dem Faltkern zugewandten Seite eine Einwölbung auf, deren Innenkontur mit der Außenkontur des gewölbten Abschnitts eines Formsegments korrespondiert.

In Weiterbildung der Erfindung ist an dem Zylinder seitlich ein Schieber angeordnet, der an den Zylinder anstellbar ist. Durch den Schieber ist ein Zugang zu dem zylinderaufnehmenden Raum des Spritzgießteils ermöglicht, wodurch ein anschließendes Ausspritzen des Raums mit Kunststoff ermöglicht ist.

Der folgenden Erfindung liegt weiterhin die Aufgabe zugrunde, ein Verfahren zur Herstellung von Kugellagerringen mit Laufrillen zu schaffen, bei dem die Ausbildung von hervorstehenden Trennmarkierungen vermieden ist. Gemäß der Erfindung wird diese Aufgabe durch die Merkmale des kennzeichnenden Teils des Patentanspruchs 8 gelöst.

Mit der Erfindung ist ein Verfahren zur Herstellung von Kugellagerringen mit Laufrillen geschaffen, bei dem die Ausbildung von hervorstehenden Trennmarkierungen vermieden ist. Vorteilhaft werden im Bereich der Teilungskanten radial angestellte Zylinder der Form anschließend zurückgefahren und nachfolgend wird Formmasse in die durch die Zylinder bewirkten Ausnehmungen eingespritzt. Hierdurch ist die Ausbildung eines massiven Querschnitts bewirkt.

Gegenstand der vorliegenden Erfindung ist weiterhin ein Innenring bzw. ein Außenring eines Radialkugellagers bei dem umlaufend zur Laufrille quer zu dieser verlaufende Kerben angeordnet sind. Diese Kerben nehmen die Trennmarkierungen auf und bewirken einen ungehinderten Lauf der Kugeln innerhalb des Kugellagers.

Weiterhin ist Gegenstand der Erfindung ein Innenring oder Außenring eines Radialkugellagers, bei dem die Laufrille umlaufend quer zu dieser angeordnete Verfestigung aufweist. Diese Verfestigungen resultieren aus der Einebnung der Trennmarkierungen im Anschluss an das Spritzgießverfahren, wodurch ein ungehinderter Lauf der Kugeln in dem Kugellager erzielt ist. Dabei sind Verfahrensbedingt gegenüberliegend den Verfestigungen in dem Innen- bzw. Außenring Nachspritzmarken angeordnet. Diese Nachspritzmarken resultieren durch die Auffüllung des Zylinderhohlraums, wodurch ein durchgehend massiver Querschnitt des Innen- bzw. Außenrings erzielt ist.

Andere Weiterbildungen und Ausgestaltungen der Erfindung sind in den übrigen Unteransprüchen angegeben. Ein Ausführungsbeispiel der Erfindung ist in den Zeichnung dargestellt und wird nachfolgend im Einzelnen beschrieben. Es zeigen:
- Fig. 1: die schematische Darstellung einer Vorrichtung zur Herstellung von Kugellagerringen mit Laufrillen im Kunststoffspritzgießverfahren mit innenliegendem Faltkern unmittelbar nach Abschluss der Einspritzphase im Schnitt (Spritzgießform angedeutet);
- Fig. 2: die schematische Darstellung der Vorrichtung aus Figur 1 im Schnitt A-B;

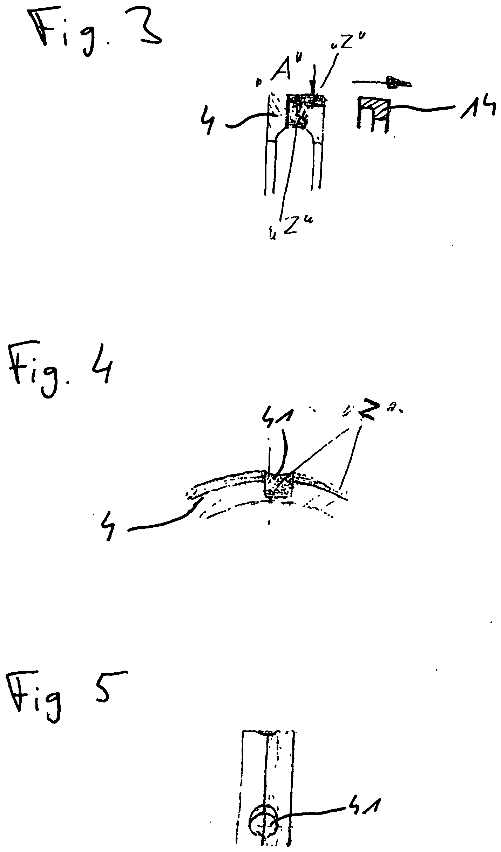

- Fig. 3: die schematische Darstellung des Details "Y" in Figur 2 mit ausgefahrenem Schieber (Nachspritzvorgang);
- Fig. 4: die schematische Darstellung der Detailansicht aus Figur 3 im Schnitt "Z-Z";
- Fig. 5: die schematische Darstellung der Detailansicht aus Figur 3 aus der Ansicht A und
- Fig. 6: die schematische Darstellung einer Vorrichtung zur Herstellung von Kugellagerringen mit Laufrillen in einer zweiten Ausführungsform in Schnittdarstellung (Vorrichtung für Innenring angedeutet).

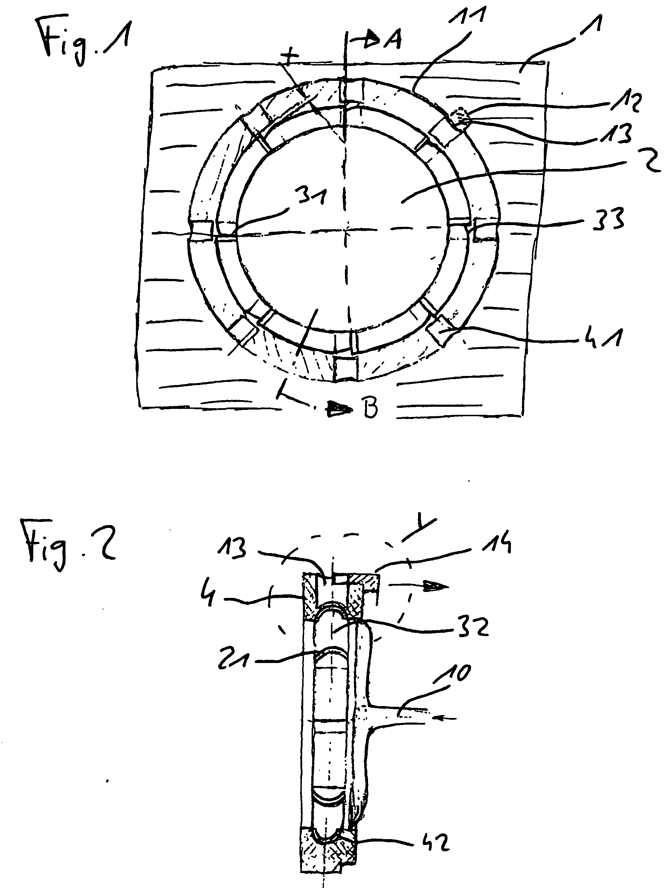

Die als Ausführungsbeispiel gewählte Vorrichtung gemäß Figur 1 umfasst im Wesentlichen eine Spritzgießform 1, welche über ein in - Figur 2 angedeutetes - Einspritzmodul 10 verschließbar und mit Kunststoffmasse verfüllbar ist. Innerhalb der Spritzgießform 1 ist ein Faltkern 2 angeordnet, der aus Segmenten 3 gebildet ist. Die Innenkontur 11 der Spritzgießform 1 bildet zusammen mit der Außenkontur des Faltkerns 2 den zu fertigenden Kugellagerring 4 aus. Einzelheiten der Form 1, insbesondere der Antriebsmittel für die Verschiebung von Teilen der Form zum Öffnen und Schließen sowie das Trägerprofil für die Segmente 3 des Faltkerns 2 sind im Einzelnen nicht dargestellt. Die grundsätzliche Gestaltung einer solchen Spritzgießform 1 sowie des die Segmente 3 des Faltkerns 2 aufnehmenden Trägerprofils sind dem Fachmann u. a. aus der DE 101 27 566 C1 hinlänglich bekannt.

Innerhalb der Spritzgießform 1 sind im Ausführungsbeispiel im Bereich der Teilungskanten 31 der Segmente 3 des Faltkerns 2 umlaufend acht Zylinder 12 angeordnet, welche radial verschiebbar ausgebildet sind. Die Zylinder 12 weisen an ihrer dem Faltkern zugewandten Seite eine Einwölbung 13 auf, die mit der Außenkontur des gewölbten Abschnitts 32 der Segmente 3 korrespondiert. Der die Zylinder 12 aufnehmende Zylinderraum 14 der Spritzgießform 1 ist an einer Seite mit einer Öffnung versehen, welche über einen axial verschiebbaren Schieber 15 verschließbar ist.

Der Faltkern 2 ist im Ausführungsbeispiel gebildet durch acht lediglich schematisch dargestellte Segmente 3, welche an ihrer radial nach außen gerichteten Seite einen gewölbten Abschnitt 32 aufweisen. Die Außenkontur der gewölbten Abschnitte 32 der Segmente 3 dienen der Ausbildung der Laufrille des zu fertigenden Kugellagerrings 4. Jeweils an ihrer gemäß der Schnittdarstellung in Figur 1 im Gegenuhrzeigersinn äußeren Teilungskante ist an dem gewölbten Abschnitt 32 eines jeden Segments 3 eine Kerbe 33 eingebracht, welche sich über den gesamten Außenumfang des gewölbten Abschnitts 32 erstreckt. Hierdurch ergeben sich im Bereich der Teilungskanten 31 des Segments 3 umlaufende Furchen 21.

Bei der Herstellung eines Kugellagerrings wird zunächst über das in Figur 2 angedeutete Einspritzmodul 10 verflüssigter Thermoplastkunststoff in den zwischen der Innenkontur 11 der Spritzgießform 1 und der Außenkontur des Faltkerns 2 gebildeten Zwischenraum eingebracht. Dabei ragen die Zylinder 12 aus der Innenkontur 11 der Spritzgießform 1 hervor, sodass in dem Kugellagerring 4 Zylinderräume 41 gebildet sind. Das verflüssigte Kunststoffmaterial dringt dabei auf der den Zylindern 12 gegenüberliegenden Seite in die durch die Kerben 33 der Segmente 3 gebildeten Furchen 21 des Faltkerns ein. Nach dem Einspritzen der Formmasse wird der Faltkern 2 über einen - nicht dargestellten - Antrieb entgegen dem Uhrzeigersinn um etwa 15° rotiert, wodurch die in den Furchen 21 des Faltkerns 2 befindliche Formmasse gegen die Zylinder 12 der Spritzgießform 1 gepresst und eingeebnet wird. Hierdurch entstehen im Bereich der Teilungskanten 31 verfestigte Zonen. Nachfolgend werden die Zylinder 12 in die Spritzgießform 1 eingefahren und die Schieber 15 werden aus den durch die Zylinder 12 ausgebildeten Zylinderräume 41 des Kugellagerrings 4 herausgefahren. Durch die so freigegebene Öffnung werden die Zylinderräume 41 nun mit thermoplastischem Kunststoffmaterial verfüllt, sodass ein durchgehend massiver Querschnitt der Kugellagerringe 4 erzielt ist. Nachfolgend wird die Spritzgießform 1 geöffnet und der Faltkern 2 in bekannter Art und Weise durch axiale Bewegung der Segmente 3 auf dem - nicht dargestellten - Trägerprofil "zusammengefaltet", sodass der nunmehr abgekühlte plastifizierte Kugellagerring entnommen werden kann. Der so hergestellte Kugellagerring 4 zeichnet sich dadurch aus, dass dessen Laufrille 42 umlaufend quer zu dieser angeordnete Verfestigungen aufweist. Gegenüberliegend dieser Verfestigungen sind zudem durch das Verfüllen der Zylinderräume 41 Nachspritzmarken feststellbar.

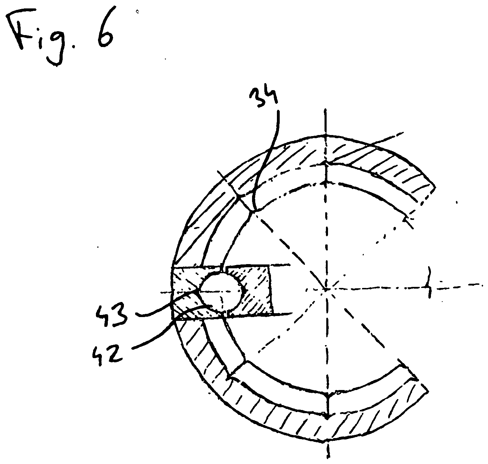

Im Ausführungsbeispiel gemäß Figur 6 sind an beiden Teilungskanten 31 der Segmente 3 an den gewölbten Abschnitten 32 nach außen sich konisch erweiternde Aufwölbungen 34 angeformt. Dabei sind die Aufwölbungen 34 derart ausgebildet, dass sich jeweils die beiden Aufwölbungen an der Teilungskante 31 zweier benachbarter Segmente 3 zu einem umlaufend des gewölbten Abschnitts 32 verlaufenden Steg mit dreieckförmigen Querschnitt ergänzen. In dieser Ausführungsform sind in der Spritzgießform 1 keine Zylinder oder Schieber vorhanden. Zudem ist eine Rotation des Faltkerns 2 nicht erforderlich. Beim Einbringen der Formmasse in den zwischen der Innenkontur 11 der Spritzgießform 1 und der Außenkontur des Faltkerns 2 gebildeten Formraum wird durch die Aufwölbungen 34 Formmasse verdrängt, wodurch im Bereich der Teilungskanten 31 quer zur Laufrille 42 Furchen 43 ausgebildet sind. Die sich im Bereich der Teilungskanten 31 ausbildenden Trennmarkierungen sind innerhalb dieser Furchen 43 angeordnet, sodass sie nicht in die Laufrille 42 hineinragen, wodurch eine Beeinträchtigung des Laufs der Kugeln des Kugellagers vermieden ist. In Figur 6 ist schematisch der Querschnitt eines in dieser Vorrichtung hergestellten Innenrings und eines Außenrings dargestellt. Es ist ersichtlich, dass der durch Innen- und Außenring gebildete Kugelkäfig durch die in den Furchen 43 angeordneten Trennmarken nicht beeinträchtigt ist. Zudem ist eine Rotation des Faltkerns 2 nicht erforderlich.

## Patentansprüche

1. Vorrichtung zur Herstellung von Kugellagerringen mit Laufrillen im Kunststoffspritzgießverfahren, umfassend eine Form mit einem Faltkern, der aus Formsegmenten gebildet ist, die axial verschiebbar auf einem Trägerprofil angeordnet sind und axial gewölbte Abschnitte zur Ausformung der Laufrille aufweisen, **dadurch gekennzeichnet, dass** die Wölbung des gewölbten Abschnitts (32) eines jeden Formsegments (3) an wenigstens einer Teilungskante (31) des Formsegments (3) eine Durchmesseränderung aufweiset.

2. Vorrichtung nach Anspruch 1, **dadurch gekennzeichnet, dass** an beiden Teilungskanten (31) eines jeden Formsegments (3) eine Durchmesseränderung in Form eines erhabenen Keils angeordnet ist.

3. Vorrichtung nach Anspruch 1, **dadurch gekennzeichnet, dass** an einer Teilungskante (31) eine Durchmesseränderung in Form einer Kerbe (33) angeordnet ist, wobei das Trägerprofil um seine Achse rotierbar ausgeführt ist.

4. Vorrichtung nach Anspruch 3, **dadurch gekennzeichnet, dass** das Trägerprofil mit einem Schrittmotor verbunden ist, über den es rotierbar ist.

5. Vorrichtung nach einem der Ansprüche 3 bis 4, **dadurch gekennzeichnet, dass** in der Form (1) im Bereich der Teilungskanten (31) jeweils ein radial verfahrbarer Zylinder (12) angeordnet ist.

6. Vorrichtung nach Anspruch 5, **dadurch gekennzeichnet, dass** der Zylinder (12) an seiner dem Faltkern (2) zugewandten Seite eine Einwölbung (13) aufweist, deren Innenkontur mit der Außenkontur des gewölbten Abschnitts (32) eines Formsegments (3) korrespondiert.

7. Vorrichtung nach Anspruch 5 oder 6, **dadurch gekennzeichnet, dass** an dem Zylinder (12) seitlich ein Schieber (14) angeordnet ist, der an den Zylinder (12) anstellbar ist.

8. Verfahren zur Herstellung von Kugellagerringen mit Laufrillen mit einer Vorrichtung nach einem der Ansprüche 3 bis 7, **dadurch gekennzeichnet, dass** nach der Einspritzphase während der Abkühlung der Formmasse das Trägerprofil mit den auf diesem angeordneten Formsegmenten (3) relativ zur Form (1) rotiert wird, wobei die in den Kerben (33) der Formsegmente (3) befindliche Formmasse an den Radius der Laufrille (42) angedrückt wird.

9. Verfahren nach Anspruch 8, **dadurch gekennzeichnet, dass** im Bereich der Teilungskanten (31) radial angestellte Zylinder (12) der Form (1) anschließend zurückgefahren werden und nachfolgend Formmasse in die durch die Zylinder (12) bewirkten Ausnehmungen (41) eingespritzt wird.

10. Innenring oder Außenring eines Radialkugellagers, hergestellt mit einer Form nach Anspruch 2, **dadurch gekennzeichnet, dass** die Laufrille (42) umlaufend quer zu dieser angeordnete Kerben aufweist.

11. Innenring oder Außenring eines Radialkugellagers, hergestellt nach dem Verfahren gemäß Anspruch 9 oder 10, **dadurch gekennzeichnet, dass** die Laufrille (42) umlaufend quer zu dieser angeordnete Verfestigungen aufweist.

12. Innenring oder Außenring nach Anspruch 11, **dadurch gekennzeichnet, dass** gegenüberliegend den Verfestigungen in dem Innen- bzw. Außenring Nachspritzmarken angeordnet sind.

## Claims

1. Device for manufacturing ball-bearing ring with running grooves using the plastic injection-moulding process, comprising a die with a collapsing core which is formed of die segments which are arranged to move axially on a carrier profile and which have axially curved sections to form the running groove, **characterised in that** the curve of the curved section (32) of each die segment (3) changes in diameter at at least one parting edge (31) of the die segment (3).

2. Device in accordance with claim 1, **characterised in that** a change in diameter in the shape of a raised wedge is arranged at both parting edges (31) of each die segment (3).

3. Device in accordance with claim 1, **characterised in that** a change in diameter in the shape of a notch (33) is arranged on one parting edge (31), where the carrier profile is designed to rotate around its axis.

4. Device in accordance with claim 3, **characterised in that** the carrier profile is connected to a stepping motor by means of which it can rotate.

5. Device in accordance with either of the claims 3 or 4, **characterised in that** a radially moving cylinder (12) is arranged in the die (1) in the area of each of the parting edges (31).

6. Device in accordance with claim 5, **characterised in that** the cylinder (12) has an inward curve (13) at the side facing the collapsing core (2), whose inward curve corresponds to the outer contour of the curved section (32) of a die segment (3).

7. Device in accordance with claim 5 or claim 6, **characterised in that** a slide (14) is arranged at the side of the cylinder (12) which slide can be moved against the cylinder (12).

8. Process for manufacturing ball-bearing rings with running grooves using a device in accordance with any of the claims 3 to 7, **characterised in that**, following the injection phase and while the moulded material is cooling, the carrier profile and the die segments (3) arranged thereon are rotated in relation to the die (1) thereby causing the moulded material located in the notches (33) of the die segments (3) to be pressed against the radius of the running groove (42).

9. Process in accordance with claim 8, **characterised in that** the cylinders (12) of the die (1) advanced radially in the area of the parting edges (31) are then retracted and then moulding material is injected into the cavities (41) created by the cylinders (12).

10. Inner or outer ring of a radial ball bearing manufactured using a die in accordance with claim 2, **characterised in that** the running groove (42) has notches arranged circumferentially at right angles to it.

11. Inner or outer ring of a radial ball bearing manufactured using a process in accordance with claim 9 or claim 10, **characterised in that** the running groove (42) has stabilisers arranged circumferentially at right angles to it.

12. Inner or outer ring in accordance with claim 11, **characterised in that** post-injection markers are arranged opposite the stabilisers in the inner or outer ring.

## Revendications

1. Dispositif destiné à la fabrication de bagues de roulement à billes avec gorges de roulement selon le procédé du moulage par injection, comprenant un moule avec noyau rétractable formé à partir de segments de moule disposés déplaçables axialement sur un profilé support et qui présentent des sections bombées axialement pour modeler la gorge de roulement, **caractérisé en ce que** le bombement de la section bombée (32) de chaque segment (3) de moule présente une modification de diamètre sur au moins un bord (31) de division du segment (3) de moule.

2. Dispositif selon la revendication 1, **caractérisé en ce que** contre les deux bords (31) de division de chaque segment (3) de moule se trouve une modification de diamètre sous forme de cale en relief.

3. Dispositif selon la revendication 1, **caractérisé en ce que** contre un bord (31) de division se trouve une modification de diamètre sous la forme d'une entaille (33), sachant que le profilé support est exécuté tournant sur son axe.

4. Dispositif selon la revendication 3, **caractérisé en ce que** le profilé support est relié à un moteur pas-à-pas via lequel il peut tourner.

5. Dispositif selon la revendication 3 ou 4, **caractérisé en ce que** respectivement un vérin (12) déplaçable radialement est disposé dans le moule (1), dans la zone des bords (31) de division.

6. Dispositif selon la revendication 5, **caractérisé en ce que** le vérin (12) présente, sur son côté regardant le noyau rétractable (2), une concavité (13) dont le contour intérieur épouse le contour extérieur de la section bombée (32) d'un segment (3) de moule.

7. Dispositif selon la revendication 5 ou 6, **caractérisé en ce qu'**un curseur (14) est disposé latéralement contre le vérin (12), curseur qu'il est possible de placer contre le vérin (12).

8. Procédé destiné à la fabrication de bagues de roulement à billes avec gorges de roulement, au moyen d'un dispositif selon l'une des revendications 3 à 7, caractérisé en qu'après de la phase d'injection, pendant le refroidissement de la masse moulée, on fait tourner le profilé support - avec les segments (3) de moule disposés dessus - par rapport au moule (1), sachant que la masse moulée se trouvant dans les entailles (33) des segments (3) du moule est poussée contre le rayon de la gorge de roulement (42).

9. Procédé selon la revendication 8, **caractérisé en ce que** l'on fait ensuite reculer des vérins (12) du moule (1) disposés dans la zone des bords (31) de division et qu'ensuite la masse à mouler est injectée dans les évidements (41) générés par les vérins (12).

10. Bague intérieure ou bague extérieure d'un roulement à billes radial, fabriquée avec un moule selon la revendication 2, **caractérisée en ce que** la gorge de roulement (42) présente périphériquement des entailles agencées transversalement à la gorge.

11. Bague intérieure ou bague extérieure d'un roulement à billes radial, fabriquée selon le procédé de la revendication 9 ou 10, **caractérisé en ce que** la gorge de roulement (42) présente périphériquement des renforts disposés transversalement à la gorge.

12. Bague intérieure ou bague extérieure selon la revendication 11, **caractérisée en ce qu'**en face des renforts des repères de post-injection ont été disposés dans la bague intérieure et la bague extérieure.
